# FASCICULE DE BREVET EUROPEEN

(11) **EP 2 473 713 B1**
(45) Date de publication et mention de la délivrance du brevet: **06.01.2016**
(21) Numéro de dépôt: 10748101.2
(22) Date de dépôt: 02.09.2010
(51) Int. Cl.: F01D 11/24, F01D 25/24

(54) **DISPOSITIF DE SUPPORT D'UN ANNEAU DE TURBINE, TURBINE AVEC UN TEL DISPOSITIF ET TURBOMOTEUR AVEC UNE TELLE TURBINE**
TRÄGERVORRICHTUNG FÜR EINEN TURBINENRING, TURBINE MIT EINER DERARTIGEN VORRICHTUNG UND TURBINENMOTOR MIT EINER DERARTIGEN TURBINE
DEVICE FOR SUPPORTING A TURBINE RING, TURBINE HAVING SUCH A DEVICE, AND TURBINE ENGINE HAVING SUCH A TURBINE

(30) Priorité: 04.09.2009 FR 0956049
(43) Date de publication de la demande: 11.07.2012
(73) Titulaire: Turbomeca, 64510 Bordes (FR)
(72) Inventeur: MORAINES, Christophe-Olivier, F-64100 Bayonne (FR); PARDO, Frédéric, Philippe, Jean-Jacques, F-64000 Pau (FR)
(74) Mandataire: Gevers France
(86) Numéro de dépôt international: PCT/EP2010/062914
(87) Numéro de publication internationale: WO 2011/026921

(56) Documents cités:
- FR-A1- 2 159 378
- US-A- 4 786 232
- US-A1- 2005 232 752

## Description

L'invention concerne le domaine des turbines à gaz et plus précisément des anneaux de turbines et de leurs dispositifs de support.

Un turbomoteur pour un aéronef tel qu'un avion ou un hélicoptère comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression et un corps basse pression; dans une configuration différente, le turbomoteur peut comprendre une première turbine reliée à un compresseur et une seconde turbine dite libre, qui est reliée à un arbre entraînant par exemple un rotor d'un hélicoptère (la première turbine, reliée au compresseur, est alors généralement dénommée turbine haute pression).

Dans la suite, on désignera l'expression "haute pression" par l'acronyme "HP" et l'expression "basse pression" par l'acronyme "BP".

La turbine HP est située à la sortie de la chambre de combustion. Elle comporte un ou plusieurs étages d'aubes, chaque étage comportant généralement, de manière connue, une roue d'aubes fixes appelée distributeur HP et une roue d'aubes mobiles. La roue d'aubes mobiles est entraînée en rotation autour de l'axe du turbomoteur par le flux de gaz en sortie de la chambre de combustion et est solidaire en rotation de l'arbre HP du turbomoteur, lui-même solidaire des roues d'aubes mobiles du compresseur HP. La veine de gaz au niveau de la roue d'aubes mobiles de la turbine HP est délimitée, du côté externe, par un carter sous forme d'anneau, s'étendant à la périphérie des aubes mobiles et classiquement désigné par l'expression "anneau de turbine"; cet anneau peut être monobloc ou découpé en secteurs d'anneau; dans la suite, sauf si cela est précisé, le terme "anneau" couvrira ces deux possibilités, c'est-à-dire soit un anneau monobloc soit un anneau découpé en secteurs d'anneau. L'anneau est supporté par une pièce dénommée support d'anneau et reliée à la structure fixe du turbomoteur.

Pour permettre aux aubes mobiles de tourner, un jeu est ménagé entre les extrémités radiales des aubes mobiles et l'anneau fixe de turbine, qui s'étend en vis-à-vis des extrémités radiales des aubes. Plus ce jeu est grand, moins l'efficacité (ou encore rendement) de la turbine HP et donc du turbomoteur est bonne, puisqu'une partie du flux de gaz en sortie de la chambre de combustion s'écoule dans ce jeu sans participer à l'entraînement en rotation de la roue d'aubes mobiles de la turbine.

La zone de la turbine HP est sujette à des sollicitations thermiques importantes, notamment en raison de sa position en aval de la chambre de combustion. Les pièces de cette zone sont soumises à au moins quatre sollicitations thermiques distinctes:
- une convection thermique d'un flux de gaz de refroidissement en provenance du compresseur;
- une conduction thermique résultant des transferts de chaleur, à partir de la veine de gaz, au travers des pièces en contact les unes avec les autres;
- un rayonnement thermique en provenance des parties chaudes du turbomoteur et en particulier de la chambre de combustion et de la veine de gaz au niveau de la turbine HP et
- une convection thermique importante du flux de gaz de la veine, qui peut être aggravée lorsqu'une partie du flux s'échappe de la veine et s'infiltre au niveau de la liaison entre l'anneau de turbine et sa pièce de support du côté externe de l'anneau (on parle alors de ré-ingestion de gaz de veine ou bypass, qui provoque une perturbation thermique de l'anneau de turbine ainsi qu'une perte de rendement du moteur, puisqu'une partie des gaz de l'écoulement principal ne suit pas son trajet normal mais celui du bypass).

Ces sollicitations thermiques diverses entraînent des dilatations différentielles - entre les différentes pièces impliquées - et des gradients de températures au sein des pièces statiques qui sont difficiles à maîtriser. En particulier, les effets liés à la convection thermique due aux ré-ingestions de gaz hors de la veine sont complexes à modéliser. Ce phénomène est d'autant plus important que l'évolution des puissances des moteurs associée à un objectif de réduction de la consommation en carburant engendre une augmentation des températures des gaz en sortie de chambre de combustion des turbomoteurs actuels.

On a proposé de piloter le jeu entre les sommets d'aubes et l'anneau de turbine par différents moyens. Dans le document EP 1,475,516 par exemple, on a proposé un carter structural (sur lequel est fixée la pièce de support de l'anneau) présentant une certaine élasticité, sa forme dépendant ainsi des pressions auxquelles il est soumis aux différents régimes du moteur, ce qui permet d'adapter le jeu au niveau des sommets d'aubes.

Le document US2005/0232752 divulgue également un dispositif de support d'anneau de turbine de l'art antérieur.

La présente invention vise à proposer un dispositif de support d'un anneau de turbine permettant un meilleur pilotage des jeux en sommets d'aubes de turbine et une meilleure robustesse des pièces en vieillissement pour garantir la stabilité des caractéristiques de la veine de gaz dans le temps.

A cet effet, l'invention concerne un dispositif de support d'un anneau de turbine à gaz conformément à la revendication 1, l'anneau étant destiné à envelopper des aubes mobiles de la turbine entraînées par un flux de gaz s'écoulant de l'amont vers l'aval, le dispositif comportant au moins un crochet amont, tourné vers l'amont, destiné à être logé dans une gorge amont de l'anneau, ouverte vers l'aval, et au moins un crochet aval, tourné vers l'aval, destiné à être logé dans une gorge aval de l'anneau, ouverte vers l'amont, le dispositif comportant, en amont du crochet amont, des moyens (par exemple des orifices) d'injection de gaz de refroidissement pour refroidir le crochet amont et/ou comportant, en aval du crochet aval, des moyens (par exemple des orifices) d'injection de gaz de refroidissement pour refroidir le crochet aval.

Grâce à l'invention, les crochets du dispositif de support sont chacun logés dans une gorge de l'anneau et sont donc protégés du flux de gaz par l'anneau lui-même, ce qui garantit qu'ils conservent une forme constante quel que soit le régime de la turbine puisqu'ils sont moins impactés par les variations thermiques occasionnées. En garantissant ainsi l'intégrité des crochets, le pilotage des jeux entre les sommets d'aubes et l'anneau est facilité et donc amélioré, puisqu'on en maîtrise mieux l'évolution et l'intégrité dans le temps. Grâce aux moyens d'injection de gaz de refroidissement, l'intégrité thermique du crochet amont et/ou du crochet aval est d'autant mieux assurée, ce qui permet de plus d'optimiser les régimes thermiques transitoires.

Selon une forme de réalisation avantageuse, les gaz de refroidissement sont à une pression supérieure ou égale à la pression des gaz du flux de gaz du côté amont des aubes mobiles de la turbine. Ainsi, les gaz de refroidissement remplissent également une fonction de barrière à une éventuelle ré-ingestion des gaz du flux de gaz par le côté amont de l'anneau.

Selon une forme de réalisation avantageuse, les gaz de refroidissement sont à une pression supérieure ou égale à la pression des gaz du flux de gaz du côté aval des aubes mobiles de la turbine. Ainsi, les gaz de refroidissement remplissent également une fonction de barrière à une éventuelle ré-ingestion des gaz du flux de gaz par le côté aval de l'anneau.

Selon l'invention, le dispositif est agencé pour former entre les deux crochets une cavité pressurisée alimentée en gaz de refroidissement. Les crochets sont ainsi d'autant mieux protégés que la cavité les protège du flux de gaz de la turbine. En particulier, la pression de la cavité pressurisée est supérieure ou égale à la pression du flux de gaz du côté amont des aubes mobiles de turbine, ce qui évite une ré-ingestion de gaz en provenance du flux de gaz. La formation d'une telle cavité pressurisée est autorisée par la forme particulière de l'anneau; elle est améliorée par la présence d'éventuels moyens d'étanchéité tels que ceux présentés ci-dessous.

Selon une forme de réalisation avantageuse, la gorge amont de l'anneau présente une surface de contact avec le crochet amont de forme curviligne (en coupe axiale, s'agissant de l'axe de l'anneau qui est l'axe du turbomoteur).

Selon une forme de réalisation avantageuse, la gorge aval de l'anneau présente une surface de contact avec le crochet aval de forme curviligne (en coupe axiale, s'agissant de l'axe de l'anneau qui est l'axe du turbomoteur).

Selon une forme de réalisation avantageuse, le dispositif comporte au moins un joint amont agencé pour assurer l'étanchéité aux gaz entre l'anneau et le crochet amont, le joint amont étant logé dans la gorge amont de l'anneau. Un tel joint permet d'améliorer l'étanchéité aux gaz du dispositif, ce qui est particulièrement avantageux dans le cas où une cavité pressurisée est formée entre les crochets amont et aval et/ou dans le cas où des gaz de refroidissement amont sont destinés à former une barrière aux gaz du flux de gaz de la turbine en amont du crochet amont. Un tel joint peut par ailleurs participer au maintien de l'anneau en position axiale et radiale.

Selon une forme de réalisation avantageuse, le dispositif comporte au moins un joint aval agencé pour assurer l'étanchéité aux gaz entre l'anneau et le crochet aval, le joint aval étant logé dans la gorge aval de l'anneau. Un tel joint aval procure les mêmes avantages qu'un joint amont, du côté aval.

Selon une forme de réalisation préférée, le joint amont et/ou le joint aval est un joint du type joint tresse en matériau réfractaire. Un tel joint améliore encore l'efficacité de l'étanchéité tout en participant avantageusement au maintien de l'anneau en position axiale et radiale.

Selon une forme de réalisation avantageuse, le dispositif comporte, du côté amont de l'anneau, un joint périphérique d'étanchéité aux gaz s'écoulant du côté externe d'un carter d'un distributeur de la turbine s'étendant en amont des aubes mobiles.

Selon une forme de réalisation avantageuse, le dispositif comporte une pièce de support amont comportant le crochet amont et une pièce de support aval, distincte de la pièce de support amont, comportant le crochet aval.

Selon une forme de réalisation particulière dans ce cas, les pièces de support amont et aval sont monoblocs et annulaires et l'anneau est sectorisé en au moins deux secteurs d'anneau.

De préférence dans ce cas, les pièces de support amont et aval sont agencées pour être montées avec l'anneau par coulissement des pièces de support l'une sur l'autre et par frettage, ce qui garantit le positionnement axial et radial de l'anneau. Ce montage est facilité par la présence de joints amont et aval tels que ceux présentés ci-dessus, ces joints pouvant participer au maintien en position radiale et axiale de l'anneau sur son support.

De préférence toujours, au moins une plaquette d'étanchéité est disposée à l'interface entre des surfaces en contact de deux secteurs d'anneau successifs, dans une gorge prévue à cet effet. Selon une forme de réalisation particulière, cette plaquette est agencée pour autoriser une fuite de gaz de refroidissement depuis une cavité pressurisée formée entre les crochets vers le flux de gaz; une telle fuite évite une circulation de gaz dans le sens inverse (c'est-à-dire une fuite de gaz hors du flux de gaz de la turbine) et permet la purge des gaz de refroidissement.

Selon une autre forme de réalisation particulière, l'anneau est monobloc et annulaire, la pièce de support aval est monobloc et annulaire et la pièce de support amont est sectorisée en au moins deux secteurs de pièce de support.

Selon une forme de réalisation particulière dans ce cas, le diamètre radial minimal du crochet aval est supérieur au diamètre radial minimal du crochet amont. Une telle différence de diamètre facilite le montage des différents éléments entre eux.

L'invention concerne encore un anneau de turbine à gaz destiné à envelopper des aubes mobiles de la turbine entraînées par un flux de gaz s'écoulant de l'amont vers l'aval, l'anneau étant destiné à être supporté par le dispositif de support présenté ci-dessus, l'anneau comportant une gorge amont, ouverte vers l'aval, destinée à recevoir au moins un crochet amont, tourné vers l'amont, du dispositif de support, et une gorge aval, ouverte vers l'amont, destinée à recevoir au moins un crochet aval, tourné vers l'aval, du dispositif de support.

L'invention concerne encore une turbine comportant un le dispositif de support présenté ci-dessus.

L'invention concerne encore un turbomoteur (ou un turboréacteur) comportant une telle turbine.

L'invention sera mieux comprise à l'aide de la description suivante de la forme de réalisation préférée de l'invention, en référence aux planches de dessins annexées, sur lesquelles:
- la figure 1 représente une vue schématique en coupe axiale d'un anneau de turbine et de son dispositif de support conformément à une première forme de réalisation préférée de l'invention;
- la figure 2 représente une vue schématique détaillée de l'anneau et du dispositif de support de la figure 1, avec représentation des flux de gaz de refroidissement;
- la figure 3 représente une vue schématique en coupe axiale d'un anneau de turbine et de son dispositif de support conformément à une deuxième forme de réalisation préférée de l'invention;
- les figures 4a à 4c sont des représentations schématiques des différentes étapes de montage de l'anneau et du dispositif de support de la figure 3.

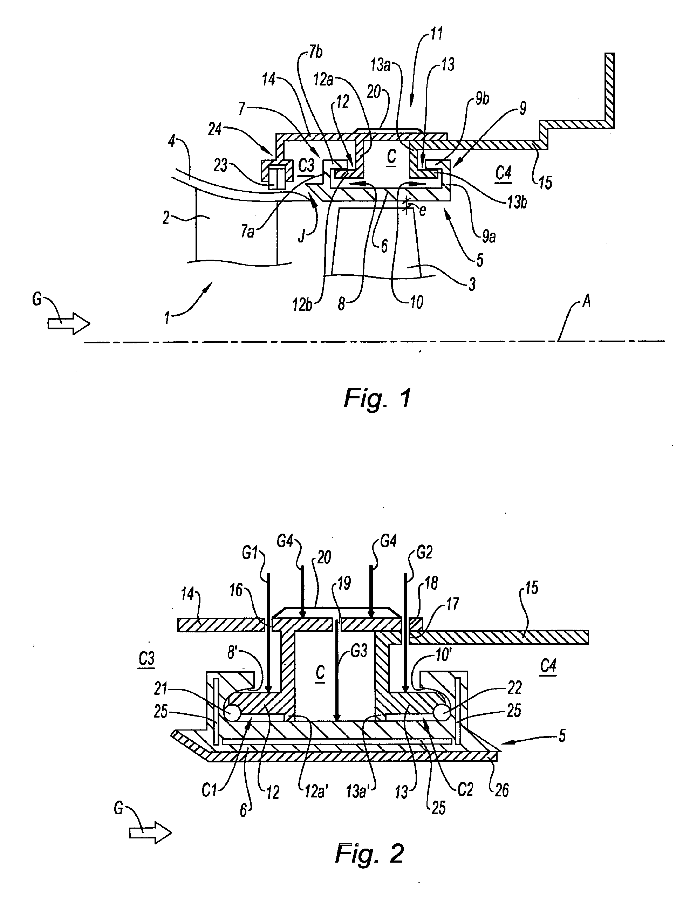

En référence à la figure 1, un turbomoteur, par exemple destiné à être utilisé sur un avion ou un hélicoptère, comporte, d'amont en aval dans le sens de l'écoulement des gaz, une soufflante, un compresseur BP, un compresseur HP, une chambre de combustion, une turbine HP 1, une turbine BP et une tuyère d'échappement des gaz. La turbine BP est reliée au compresseur BP par un arbre BP, formant un corps BP, tandis que la turbine HP est reliée au compresseur HP par un arbre HP, formant un corps HP.

L'invention va être présentée, dans ses formes de réalisations des figures 1 et 2 d'une part, 3 à 4c d'autre part, en relation avec la turbine HP 1 d'un turbomoteur du type de celui présenté ci-dessus. Bien entendu, l'invention s'applique à toute turbine soumise à des contraintes thermiques, en particulier à une turbine d'un turbomoteur d'hélicoptère comportant une turbine HP reliée à un compresseur HP et une turbine libre reliée à un arbre entraînant un rotor de l'hélicoptère (l'invention s'appliquant alors de préférence à la turbine HP mais également à la turbine libre). L'invention peut s'appliquer à d'autres types de turbines.

La turbine HP 1 comporte une roue d'aubes fixes 2, dénommée distributeur HP, et une roue d'aubes mobiles 3 entraînées en rotation par un flux de gaz G qui s'écoule, depuis l'amont vers l'aval, en provenance de la chambre de combustion. Les aubes mobiles 3 tournent autour d'un axe A qui est l'axe du turbomoteur.

On définit les notions d'interne (ou intérieur) et d'externe (ou extérieur) par rapport à l'axe A du turbomoteur, étant entendu qu'est situé ou orienté du côté interne (ou intérieur) ce qui est situé ou orienté vers l'axe A du turbomoteur. On définit par ailleurs les notions de radial et longitudinal par rapport à l'axe A du turbomoteur et les notions d'amont et d'aval par rapport au sens d'écoulement des gaz.

De manière connue, la veine de gaz au niveau de la turbine HP 1 est délimitée, du côté externe, par un carter annulaire 4 (classiquement dénommé "méridienne externe" par l'homme du métier) sur lequel sont fixées les aubes fixes 2 du distributeur et par un anneau 5, dénommé anneau de turbine 5, qui est monté en aval du carter 4 et forme un carter enveloppant les aubes mobiles 3.

L'anneau de turbine 5 est de forme globale annulaire sur toute sa périphérie, c'est-à-dire sur 360°. Dans la forme de réalisation des figures 1 et 2, il est découpé en une pluralité de secteurs d'anneau 5 (en l'espèce une dizaine de secteurs) qui, juxtaposés bout à bout, forment l'anneau 5 dans sa globalité; on parle d'anneau 5 sectorisé.

Dans la suite de la description de la forme de réalisation des figures 1 et 2, la forme d'un secteur d'anneau 5 est décrite, étant entendu que l'anneau 5 est axisymétrique (c'est une pièce de révolution); par souci de simplification de l'exposé, on confond donc les notions d'anneau 5 et de secteur d'anneau 5. Autrement dit, les caractéristiques présentées pour la structure de l'anneau s'appliquent à un anneau monobloc ou encore à un anneau sectorisé en secteurs d'anneau, étant entendu qu'un secteur d'anneau n'est finalement qu'une portion de l'anneau, présentant la même forme que l'anneau global, mais de manière sectorisée, c'est-à-dire suivant une étendue circonférentielle moins importante.

L'anneau 5 comporte une paroi interne 6 définissant la limite externe de la veine de gaz; les sommets radiaux des aubes 3 s'étendent à une distance e de cette paroi 6, cette distance correspondant au jeu e entre les sommets d'aubes 3 et l'anneau 4, que l'on souhaite pouvoir piloter au mieux et maîtriser dans le temps. L'anneau 5 comporte par ailleurs un rebord amont 7 définissant une gorge amont 8 et un rebord aval 9 définissant une gorge aval 10.

La gorge amont 8 est ouverte vers l'aval; à cet effet, le rebord amont 7 comporte une paroi radiale 7a s'étendant vers l'extérieur à partir de la paroi interne 6 de l'anneau 5 et une paroi longitudinale 7b s'étendant vers l'aval à partir de l'extrémité externe de la paroi radiale 7a (en l'espèce perpendiculairement à elle).

La gorge aval 10 est ouverte vers l'amont; à cet effet, le rebord aval 9 comporte une paroi radiale 9a s'étendant vers l'extérieur à partir de la paroi interne 6 de l'anneau 5 et une paroi longitudinale 9b s'étendant vers l'amont à partir de l'extrémité externe de la paroi radiale 9a (en l'espèce perpendiculairement à elle).

Le turbomoteur comporte un dispositif 11 de support de l'anneau 5. Ce dispositif 11 comporte un crochet amont 12, tourné vers l'amont, logé dans la gorge amont 8 de l'anneau 5 et un crochet aval 13, tourné vers l'aval, logé dans la gorge aval 10 de l'anneau 5; l'anneau 5 est ainsi supporté et maintenu en position par les crochets 12, 13.

Plus précisément, les crochets 12, 13 sont de forme annulaire et, dans la forme de réalisation des figures 1 et 2, monoblocs sur toute la périphérie de l'anneau 5 (c'est-à-dire sur la périphérie de l'ensemble des secteurs d'anneau 5).

Dans la forme de réalisation présentée, les crochets 12, 13 sont axisymétriques. Alternativement, les crochets 12, 13 peuvent être ajourés et/ou comporter une pluralité de crochets discrets répartis circonférentiellement.

Le crochet amont 12 est supporté par une pièce de support amont 14, de forme globalement cylindrique longitudinale (selon l'axe A du turbomoteur), qui est reliée à la structure fixe du turbomoteur de manière non représentée (par exemple au moyen d'une bride de fixation vissée à une bride complémentaire de la structure fixe). Le crochet 12 comporte une paroi radiale 12a s'étendant vers l'intérieur à partir de la pièce de support amont 14 et une paroi longitudinale 12b s'étendant vers l'amont à partir de l'extrémité interne de la paroi radiale 12a (en l'espèce perpendiculairement à elle).

Le crochet aval 13 est supporté par une pièce de support aval 15, de forme globalement cylindrique longitudinale (selon l'axe A du turbomoteur), qui est reliée à la structure fixe du turbomoteur de manière non représentée (par exemple au moyen d'une bride de fixation vissée à une bride complémentaire de la structure fixe). Le crochet 13 comporte une paroi radiale 13a s'étendant vers l'intérieur à partir de la pièce de support aval 15 et une paroi longitudinale 13b s'étendant vers l'aval à partir de l'extrémité interne de la paroi radiale 13a (en l'espèce perpendiculairement à elle).

Les crochets amont 12 et aval 13 sont respectivement logés dans les gorges amont 8 et aval 10 de l'anneau 5 pour le maintenir en position et sont ainsi thermiquement protégés par l'anneau 5 lui-même, plus précisément par sa paroi interne 6 et par les parois (7a, 7b), (9a, 9b) formant les rebords 7, 9, ménageant les gorges 8, 10, respectivement.

En référence à la figure 2, la gorge amont 8 présente une surface 8' de contact avec le crochet amont 12; en l'espèce, cette surface de contact 8' est de forme curviligne en coupe axiale, pour permettre un positionnement stable de l'anneau 5 sur le crochet amont 12 indépendamment d'éventuelles imprécisions de montage dues par exemple aux tolérances de fabrication.

La gorge aval 10 présente une surface 10' de contact avec le crochet aval 13; en l'espèce, cette surface de contact 10' est de forme curviligne en coupe axiale, pour permettre un positionnement stable de l'anneau 5 sur le crochet aval 13, comme expliqué ci-dessus pour le crochet amont 12.

La pièce de support amont 14 comporte des orifices 16 de refroidissement permettant l'injection de gaz de refroidissement (par exemple en provenance du compresseur) depuis l'extérieur de la pièce de support amont 14 vers le crochet amont 12, pour le refroidissement de ce dernier (les gaz de refroidissement permettent également de refroidir le rebord amont 7 de l'anneau 5); ce flux de gaz de refroidissement amont est symbolisé par la flèche G 1 de la figure 2. Le crochet amont 12, protégé par l'anneau 5, est ainsi refroidi, ce qui améliore encore sa stabilité thermique et permet de piloter les déplacements radiaux des éléments axisymétriques du dispositif de support 11, facilitant ainsi le pilotage du jeu e entre les sommets d'aubes 3 et l'anneau 5, d'autant que l'anneau 5 est également refroidi.

La pièce de support aval 15 comporte des orifices 17 de refroidissement permettant l'injection de gaz de refroidissement (par exemple en provenance du compresseur) depuis l'extérieur de la pièce de support aval 15 vers le crochet aval 13, pour le refroidissement de ce dernier (les gaz de refroidissement permettent également de refroidir le rebord aval 9 de l'anneau 5); ce flux de gaz de refroidissement aval est symbolisé par la flèche G2 de la figure 2. En l'espèce, les pièces de support amont 14 et aval 15 se recouvrant partiellement dans la zone des orifices de refroidissement 17, la pièce de support amont 14 est également percée d'orifices 18 pour le passage des gaz de refroidissement du crochet aval 13. Le crochet aval 13, protégé par l'anneau 5, est ainsi refroidi, ce qui améliore encore sa stabilité thermique et permet de piloter les déplacements radiaux des éléments axisymétriques du dispositif de support 11, facilitant ainsi le pilotage du jeu e entre les sommets d'aubes 3 et l'anneau 5, d'autant que l'anneau 5 est également refroidi.

Le refroidissement simultané des crochets amont 12 et aval 13 est particulièrement avantageux: l'anneau 5 peut ainsi être supporté par des moyens 12, 13 protégés par lui et refroidis par ailleurs, c'est-à-dire présentant une très bonne stabilité structurelle quelles que soient les fluctuations thermiques liées par exemple aux changements de régime.

Les parois radiales 12a, 13a des crochets amont 12 et aval 13 sont par ailleurs en l'espèce agencées pour former, avec une portion de la paroi longitudinale de la pièce de support amont 14 et une portion de la paroi longitudinale 6 de l'anneau 5, une enceinte pressurisée C; on note plus précisément sur la figure 2 que les parois radiales 12a, 13a des crochets 12, 13 se prolongent chacune, à leur extrémité interne, par une léchette 12a', 13a' de contact la paroi longitudinale 6 de l'anneau 5; les léchettes de contact 12a', 13a' sont des parois radiales ajourées.

La cavité pressurisée C est alimentée en gaz de refroidissement qui sont injectés au niveau d'orifices de refroidissement 19; ce flux de gaz de refroidissement est symbolisé par la flèche G3 de la figure 2. Les gaz de refroidissement refroidissent les crochets 12, 13 mais aussi l'anneau 5 et en particulier sa paroi longitudinale 6.

Une tôle perforée annulaire 20 est en l'espèce montée du côté externe de la pièce de support amont 14, au niveau de la cavité pressurisée C, pour refroidir la pièce de support amont 14 par impact de gaz (comme symbolisé par les flèches G4) ainsi que pour calibrer le débit de gaz de refroidissement G3 alimentant la cavité pressurisée C. Les impacts de gaz ménagés par cette tôle 20 permettent, en combinaison avec les flux de gaz de refroidissement amont G1 et aval G2, de piloter thermodynamiquement les déplacements radiaux des éléments axisymétriques du dispositif de support 11, permettant ainsi d'optimiser le jeu e entre les sommets d'aubes 3 et l'anneau 5.

Un joint torique d'étanchéité amont 21 est monté entre l'extrémité amont du crochet amont 12 et la surface de la gorge .amont 8 de l'anneau 5, du côté interne de cette dernière; il forme, avec la léchette de contact amont 12a', la paroi longitudinale 6 de l'anneau 5 et le crochet amont 12, une cavité C1. Ce joint 21 améliore l'étanchéité de la cavité pressurisée C du côté amont (la cavité C1 communiquant avec la cavité pressurisée C par les jours de la léchette de contact amont 12a').

Un joint torique d'étanchéité aval 22 est monté entre l'extrémité aval du crochet aval 13 et la surface de la gorge aval 10 de l'anneau 5; du côté interne de cette dernière; il forme, avec la léchette de contact aval 13a', la paroi longitudinale 6 de l'anneau 5 et le crochet aval 13, une cavité C2. Ce joint 22 améliore l'étanchéité de la cavité pressurisée C du côté aval (la cavité C2 communiquant avec la cavité pressurisée C par les jours de la léchette de contact aval 13a').

Les joints toriques 21, 22 sont en l'espèce des joints du type dit "joint tresse", c'est-à-dire qu'ils sont chacun formés d'une pluralité de brins tressés entre eux, les brins étant en l'espèce formés dans un matériau réfractaire conservant ses caractéristiques mécaniques aux chaleurs importantes auxquelles est soumis l'anneau 5. Dans la forme de réalisation présentée, chaque joint 21, 22 est sectorisé de la même manière que les secteurs d'anneau 5; alternativement, les joints 21, 22 peuvent chacun s'étendre sur l'intégralité de la circonférence de l'anneau 5, entre les différents secteurs d'anneau 5.

Le dispositif 11 de support de l'anneau 5 comporte par ailleurs un joint 23 du type "joint segment" (métallique) supporté par une bride amont 24 de la pièce de support amont 14. Le joint segment 23 est en contact avec une surface externe du carter annulaire 4 du distributeur et assure l'étanchéité aux gaz à ce niveau.

Les différents éléments de l'anneau 5 et de son dispositif de support 11, et en particulier les orifices de refroidissement 16, 17, 18, 19, sont agencés pour que les gaz de refroidissement G1, G2, G3 remplissent également une fonction de barrière (en pression) aux gaz du flux de gaz G de la turbine 1, pour éviter un bypass de ces gaz, c'est-à-dire une circulation des gaz du flux de gaz G par le côté externe de l'anneau 5, autrement dit une ré-ingestion des gaz du flux de gaz G, qui serait très pénalisante pour le rendement du turbomoteur mais aussi pour l'intégrité des pièces statiques du dispositif de support 11.

A cet effet, l'anneau 5 et son dispositif de support 11 sont agencés pour que la pression des gaz en amont du crochet amont 12, plus précisément dans une cavité C3 définie entre la bride de support 24 du joint segment 23 et le crochet amont 12, soit supérieure à la pression des gaz du flux de gaz G en amont des aubes de turbine 3; par exemple, elle peut être égale à 6 bars tandis que la pression des gaz du flux de gaz G en amont des aubes de turbine 3 est égale à 5 bars. Ainsi, les gaz de refroidissement G1 ont tendance à fuir depuis la cavité C3 vers la veine de gaz, par un jeu J entre le carter annulaire 4 du distributeur et l'anneau 5, plutôt que de fuir en sens inverse. Les crochets 12, 13 sont ainsi protégés d'une ré-ingestion de gaz en amont, ce qui évite qu'ils soient soumis à la convection thermique qui en résulterait, facilitant donc le pilotage du jeu 7 en sommets d'aubes 3 puisque les dilatations différentielles sont moindres.

On note que la pression des gaz en amont du joint segment 23 est également supérieure à la pression des gaz du flux de gaz G en amont des aubes de turbine 3, pour éviter toute remontée de gaz en cas de fuite au niveau du joint segment 23; d'ailleurs, une légère fuite peut être volontairement prévue pour protéger encore mieux les crochets d'anneau 12, 13 par un flux de gaz de refroidissement en provenance du côté amont du joint segment 23.

Par ailleurs, l'anneau 5 et son dispositif de support 11 sont agencés pour que la pression des gaz située dans une cavité C4 située en aval du crochet aval 13 soit supérieure à la pression des gaz du flux de gaz G en aval des aubes de turbine 3; par exemple, elle peut être égale à 3 bars tandis que la pression des gaz du flux de gaz G en aval des aubes de turbine 3 est égale à 2,5 bars. Ainsi, les gaz de refroidissement G1 ont tendance à fuir depuis la cavité C3 vers la veine de gaz (par un jeu non représenté), plutôt que de fuir en sens inverse. Les crochets 12, 13 sont ainsi protégés d'une ré-ingestion de gaz en aval, ce qui évite qu'ils soient soumis à la convection thermique qui en résulterait, facilitant donc le pilotage du jeu 7 en sommets d'aubes 3 puisque les dilatations différentielles sont moindres.

Par ailleurs, l'anneau 5 et son dispositif de support 11 sont agencés pour que la pression des gaz dans la cavité pressurisée C soit supérieure ou égale (en l'espèce sensiblement égale) à la pression des gaz du flux de gaz en amont des aubes de turbine 3, pour compléter la barrière aux gaz du flux de gaz G formée par la cavité C3 en amont du crochet amont 12.

Les cavités C3, C et C4 présentant des pressions supérieures aux pressions des gaz de la veine de gaz s'écoulant à leur niveau longitudinalement forment une barrière pour ces gaz; cette barrière protège les crochets 12, 13 et est donc particulièrement avantageuse pour le pilotage du jeu e en sommets d'aubes 3. Par ailleurs, les gaz de refroidissement alimentant ces différentes cavités C3, C, C4 permettent de refroidir les crochets 12, 13 mais également l'anneau 5.

Comme représenté sur la figure 2, et de manière connue, les secteurs d'anneau 5 comportent par ailleurs, aux interfaces entre leurs extrémités en contact, des plaquettes d'étanchéité 25, ces plaquettes 25 s'étendant par exemple dans des encoches prévues sur la surface d'extrémité de l'un ou des deux secteurs d'anneau 5 en contact. Ces plaquettes 25 sont agencées pour garantir une étanchéité maximale entre la cavité pressurisée C et la veine de gaz du flux de gaz G de la turbine et ainsi éviter les ré-ingestions de gaz de veine dans la cavité pressurisée C; bien entendu, l'étanchéité ne pouvant être parfaite, le dispositif autorise une fuite des gaz de refroidissement depuis la cavité pressurisée C dans la veine de gaz du flux de gaz G de la turbine 1, permettant la purge de ces gaz de refroidissement. La cavité pressurisée C s'étendant à l'aplomb des aubes de turbine 3 (c'est-à-dire au même niveau longitudinal que les aubes 3) et sa pression étant égale à la pression en amont des aubes 3, la pression de la cavité pressurisée est donc supérieure à la pression au niveau des aubes 3 (la pression décroît dans la turbine de l'amont vers l'aval); ainsi, les gaz passent nécessairement depuis la cavité pressurisée C vers la veine de gaz de la turbine 1 et pas l'inverse.

Pour améliorer encore sa protection thermique et limiter la conduction des gaz vers les crochets 12, 13, l'anneau 5 est en l'espèce recouvert d'un revêtement 26 de matériau céramique, du côté interne de sa paroi longitudinale 6.

Le montage de l'anneau 5 sur son dispositif de support 11 va maintenant être décrit. Il s'agit d'un montage par coulissement des pièces de support amont 14 et aval 15 l'une par rapport à l'autre et par frettage. Plus précisément, la pièce de support amont 14 est chauffée (par exemple à une température de 100°C) et déplacée par coulissement de sorte que les crochets amont 12 et aval 13 soient proches l'un de l'autre voire en contact l'un avec l'autre; ceci est possible car les pièces de support 14, 15 sont télescopiques, le rayon de la paroi longitudinale de la pièce de support amont 14 étant légèrement supérieur au rayon de la paroi longitudinale de la pièce de support aval 15. Les secteurs d'anneau 5 sont alors montés sur le crochet aval 13 (qui est logé dans leurs gorges aval 10). La pièce de support amont est alors déplacée vers l'amont jusqu'à butée du crochet amont 12 dans la gorge amont 8 de l'anneau 5; dans cette position, le crochet amont 12 est en butée, sur la surface 8' de la gorge amont par le coin amont externe de sa paroi longitudinale 12b et sur le joint tresse amont 21 par le coin amont interne de sa paroi longitudinale 12b; par ailleurs, le crochet aval 13 est en butée, sur la surface 10' de la gorge aval par le coin aval externe de sa paroi longitudinale 13b et sur le joint tresse aval 22 par le coin amont interne de sa paroi longitudinale 13b. Dans une dernière étape, on laisse l'ensemble refroidir ce qui provoque un assemblage serré entre les différentes pièces, par frettage de la pièce de support amont 14 (le rayon de sa paroi longitudinale diminuant lors de son refroidissement) sur la pièce de support aval 15, de manière dont le principe général est connu.

Le joint segment 23 est monté postérieurement, par exemple par collage, les moyens de collage disparaissant en fonctionnement.

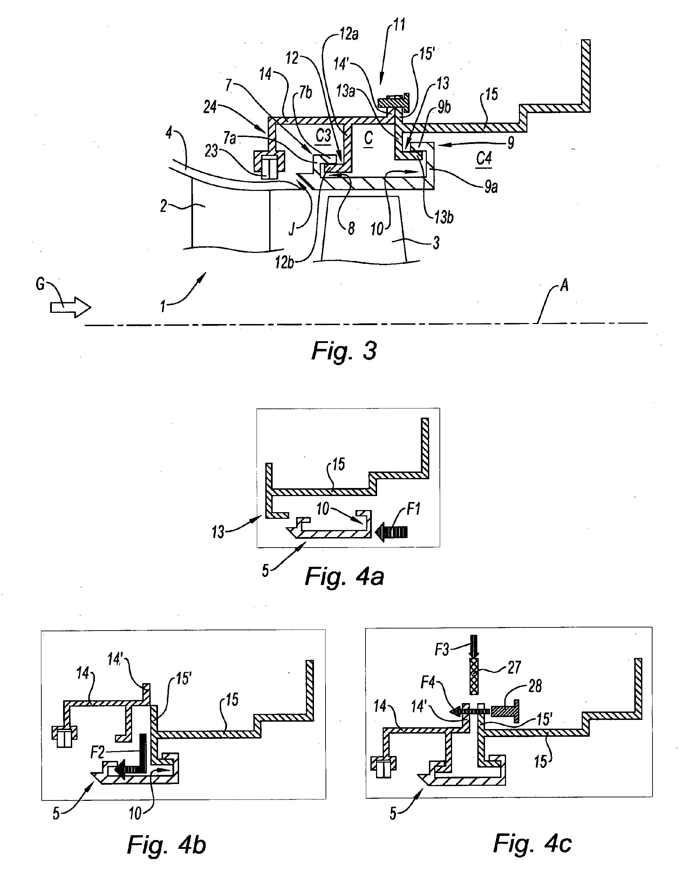

Une deuxième forme de réalisation de l'anneau et de son dispositif de support va être décrite, en relation avec les figures 3 et 4a à 4c. Cette forme de réalisation est très similaire à la forme de réalisation précédente et c'est pourquoi les références utilisées pour les éléments de la turbine des figures 3 et 4a à 4c de structure ou fonction identique, équivalente ou similaire à celles des éléments de la turbine des figures 1 et 2 sont les mêmes, pour simplifier la description. D'ailleurs, l'ensemble de la description de la turbine des figures 1 et 2 n'est pas reprise, cette description s'appliquant à la turbine des figures 1 et 2 lorsqu'il n'y a pas d'incompatibilités. Seules les différences notables, structurelles et fonctionnelles, seront décrites.

La différence principale de la deuxième forme de réalisation est que l'anneau 5 est monobloc et forme donc un anneau complet d'une seule pièce axisymétrique, sur 360° (autrement dit, il n'est pas sectorisé). Par ailleurs, la pièce de support aval 15 est également monobloc sur toute la périphérie (360°) tandis que la pièce de support amont 14 est sectorisée c'est-à-dire qu'elle est découpée en une pluralité de secteurs de pièce de support amont 14 (en l'espèce une dizaine de secteurs).

De même que précédemment, l'anneau 5 est supporté par des crochets amont 12 et aval 13 logés dans des gorges amont 8 et aval 10 de l'anneau 5, avec les mêmes avantages. Des moyens d'injection de gaz de refroidissement (non représentés) sont prévus pour le refroidissement des crochets 12, 13 mais aussi de l'anneau 5, qui pilote le jeu e en sommets d'aubes; ils alimentent des cavités pressurisées C3, C, C4; de même que précédemment, ces moyens d'injection sont agencés pour permettre aux gaz de refroidissement de remplir une fonction de barrière aux gaz du flux de gaz G de la turbine 1, pour éviter qu'ils ne circulent du côté externe de l'anneau 5; à cet effet, les pressions des gaz du côté externe de l'anneau 5 sont supérieures aux pressions correspondantes du flux de gaz G de la turbine 1.

Contrairement à la forme de réalisation des figures 1 et 2 dans laquelle les gorges amont 8 et aval 10 sont de mêmes dimensions (les rayons de leurs parois longitudinales 7b, 9b étant égaux), les gorges amont 8 et aval 10 de la forme de réalisation de la figure 3 ne sont pas de même dimensions, le rayon de la paroi longitudinale 9b du rebord aval 9 formant la gorge aval 10 étant plus important que le rayon de la paroi longitudinale 7b du rebord amont 7 formant la gorge amont 8; la paroi longitudinale 6 de l'anneau 5 étant parallèle à l'axe A du turbomoteur, la dimension radiale de là paroi radiale 9a du rebord aval 9 formant la gorge aval 10 est donc plus importante que la dimension radiale de la paroi radiale 7a du rebord amont 7 formant la gorge amont 8. La paroi longitudinale 13b du crochet aval 13 s'étend donc à une distance radiale de l'axe A du turbomoteur plus importante que la paroi longitudinale 12b du crochet amont 12 (les parois longitudinales 12b, 13b des crochets 12, 13 étant en appui dans les gorges amont 8 et aval 10 à proximité des parois longitudinales 7b, 9b des rebords 7, 9 formant ces gorges 8, 10). Ces différences de rayon permettent le montage de l'ensemble expliqué ci-dessous.

Le montage de l'anneau 5 et de son dispositif de support 11 va maintenant être décrit, plus particulièrement en référence aux figures 4a, 4b et 4c. Contrairement au montage décrit en relation avec les figures 1 et 2, il ne s'agit pas d'un montage par coulissement des pièces de support l'une sur l'autre et frettage mais d'un montage par coulissement des pièces de support par rapport à l'anneau et vissage.

En référence à la figure 4a, au cours d'une première étape, la pièce de support aval 15 est montée avec l'anneau 5 par un mouvement relatif de l'anneau 5 de l'aval vers l'amont par rapport à cette pièce 15 (ce mouvement relatif est symbolisé par la flèche F1), permettant ainsi de loger le crochet aval 13 dans la gorge aval 10 de l'anneau 5.

En référence à la figure 4b, au cours d'une deuxième étape, un premier secteur de la pièce de support amont 14 est monté avec l'anneau 5 par un mouvement relatif de ce secteur 14 de l'extérieur vers l'intérieur puis de l'aval vers l'amont par rapport à l'ensemble formé par l'anneau 15 et la pièce de support aval (ce mouvement relatif est symbolisé par la flèche F2), permettant ainsi de loger le crochet amont 12 dans la gorge amont 8 de l'anneau 5.

En référence à la figure 4c, au cours d'une troisième étape, une entretoise 27, non représentée sur la figure 3, de forme annulaire et correspondant circonférentiellement au secteur de pièce de support amont 14, est inséré entre une bride aval 14' de la pièce de support amont 14 et une bride amont 15' de la pièce de support aval 15, pour maintenir leur écartement (le mouvement de l'entretoise 27 est symbolisé par la flèche F3). Les pièces de support amont 14 et aval 15 sont alors fixées solidairement l'une à l'autre par des vis 28 (dont le mouvement est symbolisé par la flèche F4) agencées pour fixer les unes aux autres les brides 14', 15' des pièces de support 14, 15 et l'entretoise 27 insérée entre elles.

Enfin, les deuxième et troisième étapes sont répétées pour l'autre secteur de pièce de support amont 14, afin de compléter cette pièce de support amont 14 sur toute la périphérie de l'anneau 5.

Grâce à l'invention dans cette forme de réalisation, on peut en particulier maintenir en position un anneau de turbine 5 monobloc avec des crochets 12, 13 annulaires globalement axisymétriques, contrairement à l'art antérieur où les anneaux monoblocs sont maintenus avec des bras exerçant leur action de manière ponctuelle ou discrète. Par conséquent, les déformations subies par l'anneau monoblocs 5 sont axisymétriques et donc plus simples à modéliser.

## Revendications

1. Dispositif de support d'un anneau (5) de turbine à gaz (1), l'anneau (5) étant destiné à envelopper des aubes mobiles (3) de la turbine (1) entraînées par un flux de gaz (G) s'écoulant de l'amont vers l'aval, le dispositif comportant au moins un crochet amont (12), tourné vers l'amont, destiné à être logé dans une gorge amont (8) de l'anneau (5), ouverte vers l'aval, et au moins un crochet aval (13), tourné vers l'aval, destiné à être logé dans une gorge aval (10) de l'anneau (5), ouverte vers l'amont, une cavité pressurisée (C) alimentée en gaz de refroidissement étant formée entre les crochets amont (12) et aval (13), **caractérisé en ce qu'**il comporte, en amont du crochet amont (12), des moyens (16) d'injection de gaz de refroidissement pour refroidir le crochet amont (12) et/ou comportant, en aval du crochet aval (13), des moyens (17, 18) d'injection de gaz de refroidissement pour refroidir le crochet aval (13), lesdits moyens étant conformés pour que cette injection se fasse sans passer par ladite cavité pressurisée.

2. Ensemble constitué d'un dispositif selon la revendication 1, et d'un anneau de turbine comportant une gorge amont (8), ouverte vers l'aval et une gorge aval (10), ouverte vers l'amont, dans lequel la gorge amont (8) de l'anneau (5) présente une surface (8') de contact avec le crochet amont (12) de forme curviligne et/ou la gorge aval (10) de l'anneau (5) présente une surface (10') de contact avec le crochet aval (13) de forme curviligne.

3. Ensemble selon la revendication 2 qui comporte au moins un joint amont (21) agencé pour assurer l'étanchéité aux gaz entre l'anneau (5) et le crochet amont (12), le joint amont (21) étant logé dans la gorge amont (8) de l'anneau (5), et/ou au moins un joint aval (22) agencé pour assurer l'étanchéité aux gaz entre l'anneau (5) et le crochet aval (13), le joint aval (22) étant logé dans la gorge aval (10) de l'anneau (5).

4. Ensemble selon l'une des revendications 2 ou 3 qui comporte une pièce de support amont (14) comportant le crochet amont (12) et une pièce de support aval (15) comportant le crochet aval (13), dans lequel les pièces de support amont (14) et aval (15) sont monoblocs et l'anneau (5) est sectorisé en au moins deux secteurs d'anneau (5).

5. Ensemble selon la revendication 4, dans lequel les pièces de support amont (14) et aval (15) sont agencées pour être montées avec l'anneau (5) par coulissement des pièces de support (14, 15) l'une sur l'autre et par frettage.

6. Ensemble selon l'une des revendications 2 ou 3 qui comporte une pièce de support amont (14) comportant le crochet amont (12) et une pièce de support aval (15) comportant le crochet aval (13), dans lequel l'anneau (5) est monobloc, la pièce de support aval (15) est monobloc et la pièce de support amont (14) est sectorisée en au moins deux secteurs de pièce de support amont (14).

7. Turbine comportant un dispositif de support conforme au dispositif de la revendication 1 ou un ensemble selon l'une des revendications 2 à 6.

8. Turbomoteur comportant une turbine conforme à la turbine de la revendication 7.

## Patentansprüche

1. Trägervorrichtung für einen Ring (5) einer Gasturbine (1), wobei der Ring (5) bestimmt ist, bewegbare Schaufeln (3) der Turbine (1) zu umgeben, die von einem Gasstrom (G) angetrieben werden, der von oberstromig nach unterstromig fließt, wobei die Vorrichtung mindestens einen oberstromigen Haken (12), der stromaufwärts zeigt, der dazu bestimmt ist, in einer oberstromigen Nut (8) des Rings (5) untergebracht zu sein, die nach stromabwärts geöffnet ist, und mindestens einen unterstromigen Haken (13), der stromabwärts zeigt, der dazu bestimmt ist, in einer unterstromigen Nut (10) des Rings (5) untergebracht zu sein, die nach stromaufwärts geöffnet ist, aufweist, wobei ein mit Kühlgas versorgter Druckhohlraum (C) zwischen dem oberstromigen (12) und unterstromigen Haken (13) gebildet ist, **dadurch gekennzeichnet, dass** sie stromaufwärts vom oberstromigen Haken (12) Kühlgas-Einleitungsmittel (16) aufweist, um den oberstromigen Haken (12) zu kühlen, und/oder stromabwärts vom unterstromigen Haken (13) Kühlgas-Einleitungsmittel (17, 18) aufweist, um den unterstromigen Haken (13) zu kühlen, wobei diese Mittel ausgebildet sind, damit diese Einleitung erfolgt, ohne den Druckhohlraum zu durchqueren.

2. Einheit, die von einer Vorrichtung nach Anspruch 1 und von einem Turbinenring gebildet ist, der eine oberstromige Nut (8), die nach stromabwärts geöffnet ist, und eine unterstromige Nut (10), die nach stromaufwärts geöffnet ist, aufweist, wobei die oberstromige Nut (8) des Rings (5) eine krummlinige Kontaktfläche (8') mit dem oberstromigen Haken (12) aufweist und/oder die unterstromige Nut (10) des Rings (5) eine krummlinige Kontaktfläche (10') mit dem unterstromigen Haken (13) aufweist.

3. Einheit nach Anspruch 2, die mindestens eine oberstromige Dichtung (21) aufweist, die ausgebildet ist, um die Gasdichtigkeit zwischen dem Ring (5) und dem oberstromigen Haken (12) zu sichern, wobei die oberstromige Dichtung (21) in der oberstromigen Nut (8) des Rings (5) untergebracht ist, und/oder mindestens eine unterstromige Dichtung (22), die ausgebildet ist, um die Gasdichtigkeit zwischen dem Ring (5) und dem unterstromigen Haken (13) zu sichern, wobei die unterstromige Dichtung (22) in der unterstromigen Nut (10) des Rings (5) untergebracht ist.

4. Einheit nach einem der Ansprüche 2 oder 3, die ein oberstromiges Trägerteil (14) aufweist, das den oberstromigen Haken (12) aufweist, und ein unterstromiges Trägerteil (15), das den unterstromigen Haken (13) aufweist, wobei das oberstromige (14) und unterstromige (15) Trägerteil Einblockteile sind und der Ring (5) in mindestens zwei Sektoren des Rings (5) unterteilt ist.

5. Einheit nach Anspruch 4, wobei das oberstromige (14) und unterstromige (15) Trägerteil ausgebildet sind, um mit dem Ring (5) durch Gleiten der Trägerteile (14, 15) übereinander und durch Schrumpfen montiert zu sein.

6. Einheit nach einem der Ansprüche 2 oder 3, die ein oberstromiges Trägerteil (14) aufweist, das den oberstromigen Haken (12) aufweist, und ein unterstromiges Trägerteil (15), das den unterstromigen Haken (13) aufweist, wobei der Ring (5) ein Einblockteil ist, das unterstromige Trägerteil (15) ein Einblockteil ist und das oberstromige Trägerteil (14) in mindestens zwei Sektoren des oberstromigen Trägerteils (14) unterteilt ist.

7. Turbine, die eine Trägervorrichtung gemäß der Vorrichtung von Anspruch 1 oder eine Einheit gemäß einem der Ansprüche 2 bis 6 aufweist.

8. Turbinenmotor, der eine Turbine gemäß der Turbine von Anspruch 7 aufweist.

## Claims

1. A supporting device for a ring (5) of a gas turbine (1), the ring (5) being intended to enclose moving blades (3) of the turbine (1) driven by a gas flow (G) flowing from upstream to downstream, the device comprising at least one upstream hook (12), facing upstream, intended to be accommodated in an upstream groove (8) of the ring (5), which groove is open in the downstream direction, and at least one downstream hook (13), facing downstream, intended to be accommodated in a downstream groove (10) of the ring (5), which groove is open in the upstream direction, a pressurized cavity (C) being formed between the upstream hook (12) and downstream hook (13), the pressurized cavity (C) being supplied with cooling gases, **characterized in that** the device comprises, upstream of the upstream hook (12), means (16) for injecting cooling gases for cooling the upstream hook (12) and/or comprising, downstream of the downstream hook (13), means (17, 18) for injecting cooling gases for cooling the downstream hook (13), said means being arranged so that this injection is done without going through said pressurized cavity.

2. An aggregate constituted by a device as claimed in claim 1 and a turbine ring, said turbine ring comprising an upstream groove (8), which groove is open in the downstream direction and an downstream groove (10), which groove is open in the upstream direction, in which the upstream groove (8) of the ring (5) has a curvilinear surface (8') for contact with the upstream hook (12) and/or the downstream groove (10) of the ring (5) has a curvilinear surface (10') for contact with the downstream hook (13).

3. An aggregate as claimed in claim 2 which comprises at least one upstream seal (21) arranged to ensure gas-tightness between the ring (5) and the upstream hook (12), the upstream seal (21) being accommodated in the upstream groove (8) of the ring (5), and/or at least one downstream seal (22) arranged to ensure gas-tightness between the ring (5) and the downstream hook (13), the downstream seal (22) being accommodated in the downstream groove (10) of the ring (5).

4. An aggregate as claimed in one of claims 2 or 3 which comprises an upstream supporting part (14) comprising the upstream hook (12) and a downstream supporting part (15) comprising the downstream hook (13), in which the upstream supporting part (14) and downstream supporting part (15) are in one piece and the ring (5) is sectorized into at least two ring sectors (5).

5. An aggregate as claimed in claim 4, in which the upstream supporting part (14) and downstream supporting part (15) are arranged to be mounted with the ring (5) by sliding the supporting parts (14, 15) one on the other and by shrink fitting.

6. An aggregate as claimed in one of claims 2 or 3 which comprises an upstream supporting part (14) comprising the upstream hook (12) and a downstream supporting part (15) comprising the downstream hook (13), in which the ring (5) is in one piece, the downstream supporting part (15) is in one piece and the upstream supporting part (14) is sectorized into at least two upstream supporting part (14) sectors.

7. A turbine comprising a supporting device in accordance with the device of claim 1 or an aggregate in accordance with one of claims 2 to 6.

8. A turboshaft engine comprising a turbine in accordance with the turbine of claim 7.
